# EUROPEAN PATENT APPLICATION

(11) **EP 4 776 138 A1**
(43) Date of publication of application: **15.07.2026**
(21) Application number: 25221380.6
(22) Date of filing: 08.12.2025
(51) Int. Cl.: G06F 9/54, G06N 3/00

(54) **SYSTEMS, APPARATUSES, METHODS, AND COMPUTER PROGRAM PRODUCTS FOR PROVIDING A SOFTWARE APPLICATION INTEGRATION RESULT**

(30) Priority: 10.01.2025 US 202563743891 P
(71) Applicant: Hand Held Products, Inc., Charlotte, NC 28202 (US)
(72) Inventor: TODESCHINI, Erik, Charlotte, 28202 (US)
(74) Representative: Haseltine Lake Kempner LLP

(57) **Abstract**

A method provided herein includes receiving a software application integration instruction corresponding to a software application. In some embodiments, the method includes, in response to receiving the software application integration instruction, activating a first software application integration bot. In some embodiments, the first software application integration bot is configured to generate, using a software application integration model, a software application integration command. In some embodiments, the first software application integration bot is configured to transmit the software application integration command to a second software application integration bot. In some embodiments, the first software application integration bot is configured to receive a software application integration response from the second software application integration bot. In some embodiments, the first software application integration bot is configured to execute a software application integration program based on the software application integration response. In some embodiments, the method includes providing a software application integration result.

## Description

### CROSS-REFERENCE TO RELATED APPLICATIONS

This application claims the benefit of U.S. Provisional Patent Application No. 63/743,891, filed January 10, 2025, the entire contents of which are incorporated by reference herein.

### TECHNOLOGICAL FIELD

Embodiments of the present disclosure relate generally to systems, apparatuses, methods, and computer program products for providing a software application integration result.

### BACKGROUND

Applicant has identified many technical challenges and difficulties associated with systems, apparatuses, methods, and computer program products for software application integration. Through applied effort, ingenuity, and innovation, Applicant has solved problems related to systems, apparatuses, methods, and computer program products for software application integration by developing solutions embodied in the present disclosure, which are described in detail below.

### BRIEF SUMMARY

Various embodiments described herein relate to systems, apparatuses, methods, and computer program products for providing a software application integration result.

In accordance with one aspect of the disclosure, a method is provided. In some embodiments, the method includes receiving a software application integration instruction corresponding to a software application. In some embodiments, the method includes, in response to receiving the software application integration instruction, activating a first software application integration bot. In some embodiments, the first software application integration bot is configured to generate, using a software application integration model, a software application integration command. In some embodiments, the first software application integration bot is configured to transmit the software application integration command to a second software application integration bot. In some embodiments, the first software application integration bot is configured to receive a software application integration response from the second software application integration bot. In some embodiments, the first software application integration bot is configured to execute a software application integration program based on the software application integration response. In some embodiments, the method includes providing a software application integration result.

In some embodiments, the first software application integration bot is hosted by a software application implementation device and the second software application integration bot is hosted by a remote software application implementation device.

In some embodiments, the first software application integration bot is a large language model.

In some embodiments, the software application integration program comprises an application programming interface (API) configuration program.

In some embodiments, the software application integration program comprises a security protocol implementation program.

In some embodiments, the software application integration program comprises a credentials generation program.

In some embodiments, the software application integration command comprises a data type command or a data formatting command.

In some embodiments, providing the software application integration result comprises generating a software application integration interface component.

In some embodiments, the software application integration interface component comprises the software application integration command, the software application integration response, or the software application integration result.

In some embodiments, providing the software application integration result comprises causing the software application integration interface component to be rendered to a software application integration interface.

In some embodiments, providing the software application integration result comprises transmitting the software application integration result to a remote software application implementation device.

In accordance with another aspect of the disclosure, an apparatus is provided. In some embodiments, the apparatus includes memory and one or more processors communicatively coupled to the memory. In some embodiments, the one or more processors are configured to perform operations comprising receiving a software application integration instruction corresponding to a software application. In some embodiments, the one or more processors are configured to perform operations comprising, in response to receiving the software application integration instruction, activating a first software application integration bot. In some embodiments, the first software application integration bot is configured to generate, using a software application integration model, a software application integration command. In some embodiments, the first software application integration bot is configured to transmit the software application integration command to a second software application integration bot. In some embodiments, the first software application integration bot is configured to receive a software application integration response from the second software application integration bot. In some embodiments, the first software application integration bot is configured to execute a software application integration program based on the software application integration response. In some embodiments, the one or more processors are configured to perform operations comprising providing a software application integration result.

In some embodiments, the first software application integration bot is hosted by a software application implementation device and the second software application integration bot is hosted by a remote software application implementation device.

In some embodiments, the first software application integration bot is a large language model.

In some embodiments, the software application integration program comprises an application programming interface (API) configuration program.

In some embodiments, the software application integration program comprises a security protocol implementation program.

In some embodiments, the software application integration program comprises a credentials generation program.

In some embodiments, the software application integration command comprises a data type command or a data formatting command.

In some embodiments, providing the software application integration result comprises transmitting the software application integration result to a remote software application implementation device.

In accordance with another aspect of the disclosure, a computer program product is provided. In some embodiments, the computer program product includes at least one non-transitory computer-readable storage medium having computer program code stored thereon. In some embodiments, the computer program code, in execution with at least one processor, configures the computer program product for receiving a software application integration instruction corresponding to a software application. In some embodiments, the computer program code, in execution with at least one processor, configures the computer program product for, in response to receiving the software application integration instruction, activating a first software application integration bot. In some embodiments, the first software application integration bot is configured to generate, using a software application integration model, a software application integration command. In some embodiments, the first software application integration bot is configured to transmit the software application integration command to a second software application integration bot. In some embodiments, the first software application integration bot is configured to receive a software application integration response from the second software application integration bot. In some embodiments, the first software application integration bot is configured to execute a software application integration program based on the software application integration response. In some embodiments, the computer program code, in execution with at least one processor, configures the computer program product for providing a software application integration result.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates an example diagram of an environment in which embodiments of the present disclosure may operate;
FIG. 2 illustrates an example block diagram of an example apparatus that may be specially configured in accordance with an example embodiment of the present disclosure;
FIG. 3 illustrates an example interface in accordance with one or more embodiments of the present disclosure;
FIG. 4 illustrates a flowchart of an example method in accordance with one or more embodiments of the present disclosure; and
FIG. 5 illustrates a flowchart of an example method in accordance with one or more embodiments of the present disclosure.

### DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

### Overview

Example embodiments disclosed herein address technical problems associated with software application integration. As would be understood by one skilled in the field to which this disclosure pertains, there are numerous example scenarios in which software application integration is desirable. In many applications, it may be desirable to use systems, apparatuses, methods, and computer program products for software application integration. For example, it may be desirable to systems, apparatuses, methods, and computer program products for software application integration in order to enable a computing device to be integrated with a software application, such as a software application provided via a Software as a Service framework, that is provided by a remote computing device.

Example solutions for software application integration include using a computing device and a remote computing device to perform software application integration for a software application provided by the remote computing device. However, such example solutions are simplistic, inefficient, and technically deficient. For example, such example solutions are simplistic because such example solutions do not implement a first software application integration bot and/or a second software application bot to facilitate performance of multiple different aspects of a software application integration process. Instead, such example solutions rely on piecemeal components, such as application programming interfaces (API) to perform individual aspects of a software application integration process in a disjointed manner. As another example, such example solutions are inefficient because such example solutions do not leverage a large language model to facilitate performance of a software application integration process. As a result, such example solutions cause computing devices and databases to suffer from high latency, consume excessive processing power, and consume excessive memory. As another example, such example solutions are technically deficient because such example solutions are unable to automatically execute a variety of software application integration programs, such as a security protocol implementation protocol, to facilitate performance of a software application integration process. Accordingly, there is a need for systems, apparatuses, methods, and computer program products that are able to perform software application integration in a sophisticated, efficient, and technically sufficient manner.

Thus, to address these and/or other issues related to such example solutions, example systems, apparatuses, methods, and computer program products for providing a software application integration result are disclosed herein. For example, an embodiment in this disclosure, described in greater detail below, includes a method that includes receiving a software application integration instruction corresponding to a software application. In some embodiments, the method includes, in response to receiving the software application integration instruction, activating a first software application integration bot. In some embodiments, the first software application integration bot is configured to generate, using a software application integration model, a software application integration command. In some embodiments, the first software application integration bot is configured to transmit the software application integration command to a second software application integration bot. In some embodiments, the first software application integration bot is configured to receive a software application integration response from the second software application integration bot. In some embodiments, the first software application integration bot is configured to execute a software application integration program based on the software application integration response. In some embodiments, the method includes providing a software application integration result. Accordingly, systems, apparatuses, methods, and computer program products provided herein enable software application integration in a sophisticated, efficient, and technically sufficient manner.

### Example Systems and Apparatuses

Embodiments of the present disclosure herein include systems, apparatuses, methods, and computer program products configured for providing a software application integration result. It should be readily appreciated that the embodiments of the apparatus, systems, methods, and computer program product described herein may be configured in various additional and alternative manners in addition to those expressly described herein.

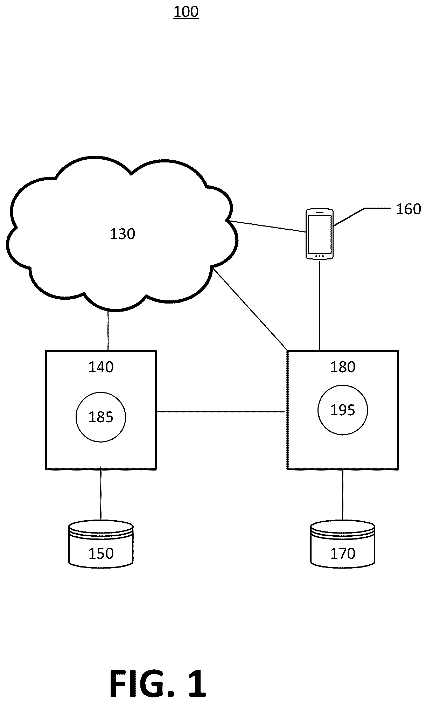

FIG. 1 illustrates an exemplary block diagram of an environment 100 in which embodiments of the present disclosure may operate. In some embodiments, the environment 100 includes a software application implementation device 140. In some embodiments, the software application implementation device 140 is electronically and/or communicatively coupled to a software application implementation database 150, a remote software application implementation database 170, a remote software application implementation device 180, and/or a user device 160. The software application implementation device 140 may be located remotely from the software application implementation database 150, the remote software application implementation database 170, the remote software application implementation device 180, and/or the user device 160. In some embodiments, the software application implementation device 140 may be located in a remote cloud server and electronically and/or communicatively coupled to the software application implementation database 150, the remote software application implementation database 170, the remote software application implementation device 180, and/or user device 160 via at least a network 130. Additionally, or alternatively, the software application implementation device 140 may be located at the same location as the software application implementation database 150, the remote software application implementation database 170, the remote software application implementation device 180, and/or the user device 160 and electronically and/or communicatively coupled to the software application implementation database 150, the remote software application implementation database 170, the remote software application implementation device 180, and/or user device 160 via one or more direct connections (e.g., via a wire). In some embodiments, the software application implementation device 140 is configured via hardware, software, firmware, and/or a combination thereof, to perform data intake of one or more types of data.

Additionally, or alternatively, in some embodiments, the software application implementation device 140 is configured via hardware, software, firmware, and/or a combination thereof, to generate and/or transmit command(s) that control, adjust, or otherwise impact operations of the one or more of the software application implementation database 150, the remote software application implementation database 170, the software application implementation device 140, the remote software application implementation device 180, and/or the user device 160. For example, the software application implementation device 140 may be configured to provide a software application integration result. Additionally, or alternatively, in some embodiments, the software application implementation device 140 is configured via hardware, software, firmware, and/or a combination thereof, to perform data reporting, provide data, and/or other data output process(es) associated with monitoring or otherwise analyzing operations of one or more of the one or more of the software application implementation database 150, the remote software application implementation database 170, the software application implementation device 140, the remote software application implementation device 180, and/or the user device 160. For example, in various embodiments, the software application implementation device 140 may be configured to execute and/or perform one or more operations and/or functions described herein. Additionally, or alternatively, the software application implementation device 140 is configured via hardware, software, firmware, and/or a combination thereof, to host, operate, activate, initiate, train, and/or the like a first software application integration bot 185.

In some embodiments, the environment 100 includes the remote software application implementation device 180. In some embodiments, the remote software application implementation device 180 is electronically and/or communicatively coupled to a software application implementation database 150, a remote software application implementation database 170, the software application implementation device 140, and/or a user device 160. The remote software application implementation device 180 may be located remotely from the software application implementation database 150, the remote software application implementation database 170, the software application implementation device 140, and/or the user device 160. In some embodiments, the remote software application implementation device 180 may be located in a remote cloud server and electronically and/or communicatively coupled to the software application implementation database 150, the remote software application implementation database 170, the software application implementation device 140, and/or user device 160 via at least a network 130. Additionally, or alternatively, the remote software application implementation device 180 may be located at the same location as the software application implementation database 150, the remote software application implementation database 170, the software application implementation device 140, and/or the user device 160 and electronically and/or communicatively coupled to the software application implementation database 150, the remote software application implementation database 170, the software application implementation device 140, and/or user device 160 via one or more direct connections (e.g., via a wire). In some embodiments, the remote software application implementation device 180 is configured via hardware, software, firmware, and/or a combination thereof, to perform data intake of one or more types of data.

Additionally, or alternatively, in some embodiments, the remote software application implementation device 180 is configured via hardware, software, firmware, and/or a combination thereof, to generate and/or transmit command(s) that control, adjust, or otherwise impact operations of the one or more of the software application implementation database 150, the remote software application implementation database 170, the remote software application implementation device 180, the software application implementation device 140, and/or the user device 160. For example, the remote software application implementation device 180 may be configured to provide a software application integration result. Additionally, or alternatively, in some embodiments, the remote software application implementation device 180 is configured via hardware, software, firmware, and/or a combination thereof, to perform data reporting, provide data, and/or other data output process(es) associated with monitoring or otherwise analyzing operations of one or more of the one or more of the software application implementation database 150, the remote software application implementation database 170, the software application implementation device 140, the remote software application implementation device 180, and/or the user device 160. For example, in various embodiments, the remote software application implementation device 180 may be configured to execute and/or perform one or more operations and/or functions described herein. Additionally, or alternatively, the remote software application implementation device 180 is configured via hardware, software, firmware, and/or a combination thereof, to host, operate, activate, initiate, train, and/or the like a second software application integration bot 195.

In some embodiments, the environment 100 includes the user device 160. The user device 160 may be associated with users of the software application implementation device 140 and/or users of the remote software application implementation device 180. In various embodiments, the software application implementation device 140 and/or the remote software application implementation device 180 may generate and/or transmit a message, alert, or indication to a user via the user device 160. Additionally, or alternatively, the user device 160 may be utilized by a user to remotely access the software application implementation device 140 and/or the remote software application implementation device 180. This may be by, for example, an application operating on the user device 160.

In some embodiments, the environment 100 includes the software application implementation database 150. The software application implementation database 150 may be configured to receive, store, and/or transmit data. In various embodiments, the software application implementation database 150 may be associated with data associated with the software application implementation device 140, the remote software application implementation database 170, the remote software application implementation device 180, and/or the user device 160. Additionally, or alternatively, in some embodiments the software application implementation database 150 stores user inputted data. The software application implementation database 150 may be located remotely from the user device 160, the remote software application implementation database 170, the remote software application implementation device 180, and/or the software application implementation device 140, in proximity of the user device 160, the remote software application implementation device 180, the software application implementation device 140, and/or the remote software application implementation database 170, and/or within the user device 160, the remote software application implementation database 170, the remote software application implementation device 180, and/or the software application implementation device 140.

In some embodiments, the environment 100 includes the remote software application implementation database 170. The remote software application implementation database 170 may be configured to receive, store, and/or transmit data. In various embodiments, the remote software application implementation database 170 may be associated with data associated with the software application implementation device 140, the software application implementation database 150, the remote software application implementation device 180, and/or the user device 160. Additionally, or alternatively, in some embodiments the remote software application implementation database 170 stores user inputted data. The remote software application implementation database 170 may be located remotely from the user device 160, the software application implementation database 150, the remote software application implementation device 180, and/or the software application implementation device 140, in proximity of the user device 160, the remote software application implementation device 180, the software application implementation device 140, and/or the software application implementation database 150, and/or within the user device 160, the software application implementation database 150, the remote software application implementation device 180, and/or the software application implementation device 140.

The network 130 may be embodied in any of a myriad of network configurations. In some embodiments, the network 130 may be a public network (e.g., the Internet). In some embodiments, the network 130 may be a private network (e.g., an internal localized, or closed-off network between particular devices). In some other embodiments, the network 130 may be a hybrid network (e.g., a network enabling internal communications between particular connected devices and external communications with other devices). In various embodiments, the network 130 may include one or more base station(s), relay(s), router(s), switch(es), cell tower(s), communications cable(s), routing station(s), and/or the like. In various embodiments, components of the environment 100 may be communicatively coupled to transmit data to and/or receive data from one another over the network 130. Such configuration(s) include, without limitation, a wired or wireless Personal Area Network (PAN), Local Area Network (LAN), Metropolitan Area Network (MAN), Wide Area Network (WAN), and/or the like.

Additionally, while FIG. 1 illustrates certain components as separate, standalone entities communicating over the network 130, various embodiments are not limited to this configuration. In other embodiments, one or more components may be directly connected and/or share hardware or the like. For example, in some embodiments, the software application implementation device 140 may include software application implementation database 150.

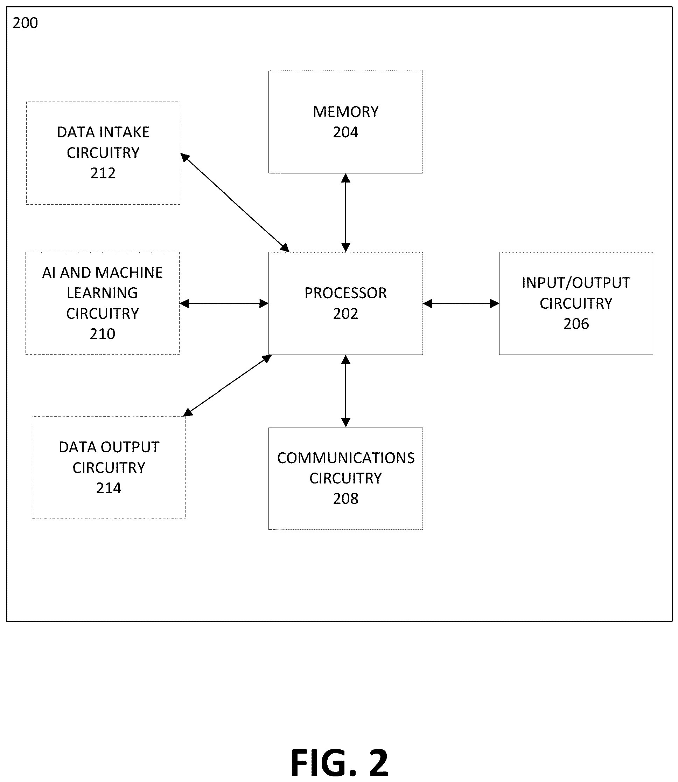

FIG. 2 illustrates an exemplary block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. Examples of an apparatus 200 may include, but is not limited to, the software application implementation device 140, the software application implementation database 150, the remote software application implementation database 170, the remote software application implementation device 180, and/or the user device 160. The apparatus 200 includes processor 202, memory 204, input/output circuitry 206, communications circuitry 208, and/or optional artificial intelligence ("AI") and machine learning circuitry 210. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, such as an computing apparatus 200 of the software application implementation device 140, the software application implementation database 150, the remote software application implementation database 170, the remote software application implementation device 180, and/or the user device 160 may refer to, for example, one or more computers, computing entities, desktop computers, mobile phones, tablets, phablets, notebooks, laptops, distributed systems, servers, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 or processor circuity 202 may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 or memory circuitry 204 may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally, or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device and/or other external computing device(s) in communication with the apparatus 200.

Data intake circuitry 212 may be included in the apparatus 200. The data intake circuitry 212 may include hardware, software, firmware, and/or a combination thereof, designed and/or configured to capture, receive, request, and/or otherwise gather data associated with operations of the software application implementation database 150, the software application implementation device 140, and/or the user device 160. In some embodiments, the data intake circuitry 212 includes hardware, software, firmware, and/or a combination thereof, that communicates with one or more components of the software application implementation database 150, the remote software application implementation database 170, the software application implementation device 140, and/or the user device 160 to receive particular data associated with such operations of the software application implementation database 150, the remote software application implementation database 170, the software application implementation device 140, and/or the user device 160. The data intake circuitry 212 may support such operations for the software application implementation database 150, the software application implementation device 140, and/or the user device 160. Additionally, or alternatively, in some embodiments, the data intake circuitry 212 includes hardware, software, firmware, and/or a combination thereof, that retrieves particular data associated with the software application implementation database 150, the software application implementation device 140, the remote software application implementation database 170, and/or the user device 160.

AI and machine learning circuitry 210 may be included in the apparatus 200. The AI and machine learning circuitry 210 may include hardware, software, firmware, and/or a combination thereof designed and/or configured to request, receive, process, generate, and transmit data, data structures, control signals, and electronic information for training and executing a trained AI and machine learning model configured to facilitating the operations and/or functionalities described herein. For example, in some embodiments the AI and machine learning circuitry 210 includes hardware, software, firmware, and/or a combination thereof, that identifies training data and/or utilizes such training data for training a particular machine learning model, Al, and/or other model to generate particular output data based at least in part on learnings from the training data. Additionally, or alternatively, in some embodiments, the AI and machine learning circuitry 210 includes hardware, software, firmware, and/or a combination thereof, that embodies or retrieves a trained machine learning model, AI and/or other specially configured model utilized to process inputted data. Additionally, or alternatively, in some embodiments, the AI and machine learning circuitry 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally, or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally, or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the AI and machine learning circuitry 210, may be combined with the processor 202, such that the processor 202 performs one or more of the operations described herein with respect the AI and machine learning circuitry 210.

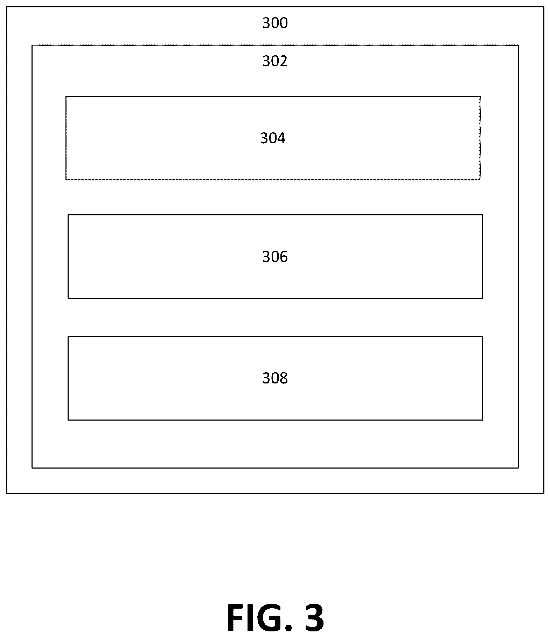

With reference to FIGS. 1-3, in some embodiments, the software application implementation device 140 is configured to receive a software application integration instruction. In some embodiments, a software application integration instruction is an instruction to a device to perform an integration process with a software application provided by another device. In this regard, in some embodiments, a software application integration instruction is an instruction to a device to perform an integration process with a software application provided by another device such that the device may exchange data with the software application and/or use the software application to generate inferences. For example, a software application integration instruction may be an instruction to the software application implementation device 140 to perform an integration process with a software application provided by the remote software application implementation device 180.

In some embodiments, a software application integration instruction corresponds to a software application. In this regard, in some embodiments, a software application integration instruction is an instruction to a device to perform an integration process with a particular software application provided by another device. For example, a software application integration instruction may be an instruction to perform an integration process with a software application provided by another device under a Software as a Service (SaaS) framework, such as an enterprise resource planning (ERP) software application.

In some embodiments, the software application implementation device 140 is configured to receive a software application integration instruction from the remote software application implementation device 180. Additionally, or alternatively, the software application implementation device 140 is configured to receive a software application integration instruction from the user device 160. For example, a user associated with the user device 160 may input a software application integration instruction into the user device 160 and the user device 160 may transmit the software application integration instruction to the software application implementation device 140. Additionally, or alternatively, the software application implementation device 140 is configured to receive a software application integration instruction directly into the software application implementation device 140. For example, a user associated with the software application implementation device 140 may directly input a software application integration instruction directly into the software application implementation device 140. Additionally, or alternatively, the software application implementation device 140 is configured to receive a software application integration instruction from one or more other computing devices.

In some embodiments, the software application implementation device 140 is configured to activate the first software application integration bot 185. In some embodiments, the first software application integration bot 185 is an automated computing entity that is configured to facilitate performance of a software application integration process. In this regard, in some embodiments, the first software application integration bot 185 is configured to start facilitating performance of a software application integration process in response to being activated by the software application implementation device 140. In some embodiments, the software application implementation device 140 is configured to activate the first software application integration bot 185 in response to receiving the software application integration instruction.

In some embodiments, the first software application integration bot 185 is configured to generate a software application integration command. In some embodiments, the software application integration command includes one or more items of data representative and/or indicative of a computing related command, message, request, question, and/or the like that is generated by the first software application integration bot 185 and associated with performing a software application integration processes. In this regard, in some embodiments, the software application integration command may be representative and/or indicative of a request to identify an application programming interface (API) configuration the software application implementation device 140 needs to use in order to exchange data with and/or generate inferences using the software application provided by the remote software application implementation device 180. Additionally, or alternatively, the software application integration command may be representative and/or indicative of a request to identify a security protocol the software application implementation device 140 needs to use in order to exchange data with and/or generate inferences using the software application provided by the remote software application implementation device 180. Additionally, or alternatively, the software application integration command may be representative and/or indicative of a request to identify security credentials the software application implementation device 140 needs to use in order to exchange data with and/or generate inferences using the software application provided by the remote software application implementation device 180.

Additionally, or alternatively, the software application integration command may be representative and/or indicative of a data type command. In some embodiments, a data type command includes one or more items of data representative and/or indicative of a computing related command, message, request, question, and/or the like in which the software application implementation device 140 indicates the type of data the remote software application implementation device 180 should provide to the software application implementation device 140 in order for the software application implementation device 140 to use the software application provided by the remote software application implementation device 180. Additionally, or alternatively, the software application integration command may be representative and/or indicative of a data formatting command. In some embodiments, a data formatting command includes one or more items of data representative and/or indicative of a computing related command, message, request, question, and/or the like in which the software application implementation device 140 indicates the a format that the remote software application implementation device 180 should provide data in to the software application implementation device 140 in order for the software application implementation device 140 to use the software application provided by the remote software application implementation device 180.

In some embodiments, the first software application integration bot 185 is configured to generate the software application integration command using a software application integration model. In some embodiments, the software application integration model may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to generate a software application integration command. In this regard, in some embodiments, the software application integration model may be configured to utilize one or more of any type of machine learning, rules-based, and/or artificial intelligence techniques including one or more of clustering techniques (e.g., k-means techniques, expectation maximization techniques, centroid neural network techniques), computer vision techniques, supervised learning (e.g., using user feedback), unsupervised learning, semi-supervised learning, reinforcement learning, sequence modeling techniques, language processing techniques, neural network techniques, and/or generative artificial intelligence techniques.

In some embodiments, the software application integration command is in a natural language format. In this regard, in some embodiments, the software application integration model includes a large language model that is configured to generate the software application integration command in a natural language format. In some embodiments, the software application integration model is hosted by the software application implementation device 140. Additionally, or alternatively, the software application integration model is hosted by a separate computing device and remotely accessed by the first software application integration bot 185 to generate the software application integration command.

In some embodiments, the first software application integration bot 185 is configured to transmit the software application integration command. In some embodiments, the first software application integration bot 185 is configured to transmit the software application integration command to the second software application integration bot 195. In some embodiments, the first software application integration bot 185 is configured to transmit the software application integration command to the second software application integration bot 195 in real-time. In this regard, for example, the first software application integration bot 185 is configured to transmit the software application integration command to the second software application integration bot 195 in response to generating the software application integration command.

In some embodiments, the first software application integration bot 185 is configured to receive a software application integration response. In some embodiments, the first software application integration bot 185 is configured to receive a software application integration response from the second software application integration bot 195. In this regard, in some embodiments, the second software application integration bot 195 is configured to generate the software application integration response. In some embodiments, the software application integration response is in a natural language format.

In some embodiments, the software application integration response is one or more items of data representative and/or indicative of a computing related command, message, request, question, response and/or the like associated with performing a software application integration processes that is responsive to a software application integration command. In this regard, in some embodiments, the software application integration response may be representative and/or indicative of an application programming interface (API) configuration the software application implementation device 140 needs to use in order to exchange data with and/or generate inferences using the software application provided by the remote software application implementation device 180. Additionally, or alternatively, the software application integration response may be representative and/or indicative of a security protocol the software application implementation device 140 needs to use in order to exchange data with and/or generate inferences using the software application provided by the remote software application implementation device 180. Additionally, or alternatively, the software application integration response may be representative and/or indicative of security credentials the software application implementation device 140 needs to use in order to exchange data with and/or generate inferences using the software application provided by the remote software application implementation device 180.

Additionally, or alternatively, the software application integration response may be representative and/or indicative of the type of data that the remote software application implementation device 180 is able to provide to the software application implementation device 140 to use the software application provided by the remote software application implementation device 180 (e.g., responsive to a data type command). Additionally, or alternatively, the software application integration response may be representative and/or indicative of the data format that the remote software application implementation device 180 is able to provide to the software application implementation device 140 to use the software application provided by the remote software application implementation device 180 (e.g., responsive to a data formatting command).

In some embodiments, the first software application integration bot 185 is configured to execute a software application integration program. In some embodiments, the first software application integration bot 185 is configured to execute a software application integration program based on the software application integration response. In this regard, for example, the first software application integration bot 185 may be configured to use the software application integration response to execute the software application integration program.

In some embodiments, a software application integration program is a computing program, a computing executable, a computing file, computing code, and/or the like that, upon execution, is configured to perform an integration process for a software application provided by the remote software application implementation device 180.

In some embodiments, a software application integration program includes an application programming interface (API) configuration program. In some embodiments, an application programming interface (API) configuration program is a computing program, a computing executable, a computing file, computing code, and/or the like that, upon execution, configures an application programming interface (API) such that the software application implementation device 140 is able to exchange data with and/or generate inferences using the software application provided by the remote software application implementation device 180. For example, an application programming interface (API) configuration program may be a computing program, a computing executable, a computing file, computing code, and/or the like that, upon execution, configures an application programming interface (API) used by the software application implementation device 140 to exchange data with and/or generate inferences using the software application provided by the remote software application implementation device 180.

In some embodiments, a software application integration program includes a security protocol implementation program. In some embodiments, a security protocol implementation program is a computing program, a computing executable, a computing file, computing code, and/or the like that, upon execution, implements a security protocol such that the software application implementation device 140 is able to exchange data with and/or generate inferences using the software application provided by the remote software application implementation device 180. For example, a security protocol implementation program may be a computing program, a computing executable, a computing file, computing code, and/or the like that, upon execution, implements a security protocol used by the software application implementation device 140 to exchange data with and/or generate inferences using the software application provided by the remote software application implementation device 180.

In some embodiments, a software application integration program includes a credentials generation program. In some embodiments, a credentials generation program is a computing program, a computing executable, a computing file, computing code, and/or the like that, upon execution, generates security credentials for the software application implementation device 140 such that the software application implementation device 140 is able to exchange data with and/or generate inferences using the software application provided by the remote software application implementation device 180. For example, a credentials generation program may be a computing program, a computing executable, a computing file, computing code, and/or the like that, upon execution, generates security credentials used by the software application implementation device 140 to exchange data with and/or generate inferences using the software application provided by the remote software application implementation device 180.

In some embodiments, the software application implementation device 140 is configured to provide a software application integration result. In some embodiments, a software application integration result includes one or more items of data representative and/or indicative of a result of an execution of a software application integration program. For example, a software application integration result may be representative and/or indicative of a result of an execution of an application programming interface (API) configuration program. As another example, software application integration result may be representative and/or indicative of a result of an execution of a security protocol implementation program. As another example, software application integration result may be representative and/or indicative of a result of an execution of a credential generation program.

In some embodiments, providing a software application integration result includes the software application implementation device 140 being configured to generate a software application integration interface component 302. In some embodiments, the software application integration interface component 302 includes a software application integration command interface element 304 configured to display a software application integration command. In some embodiments, the software application integration interface component 302 includes a software application integration response interface element 306 configured to display a software application integration response. In some embodiments, the software application integration interface component 302 includes a software application integration result interface element 308 configured to display a software application integration result.

In some embodiments, providing a software application integration result includes the software application implementation device 140 being configured to cause the software application integration interface component 302 to be rendered to a software application integration interface 300. In some embodiments, the software application integration interface 300 may be provided on the software application implementation device 140. Additionally, or alternatively, the software application integration interface 300 may be provided on the user device 160. Additionally, or alternatively, the software application integration interface 300 may be provided on the remote software application implementation device 180.

In some embodiments, providing a software application integration result includes the software application implementation device 140 being configured to transmit a software application integration result to one or more other computing devices. For example, the software application implementation device 140 may be configured to transmit a software application integration result to the remote software application implementation device 180. As another example, the software application implementation device 140 may be configured to transmit a software application integration result to the user device 160.

In some embodiments, the software application implementation device 140 is configured to transmit a second software application integration instruction to the remote software application implementation device 180. In some embodiments, a second software application integration instruction is an instruction to a device to perform an integration process with a software application provided by another device. In this regard, in some embodiments, a second software application integration instruction is an instruction to a device to perform an integration process with a software application provided by another device such that the device may exchange data with the software application and/or use the software application to generate inferences. For example, a second software application integration instruction may be an instruction to the remote software application implementation device 180 to perform an integration process with a software application provided by the software application implementation device 140.

In some embodiments, a second software application integration instruction corresponds to a software application, such as a second software application. For example, a software application integration instruction may be an instruction to perform an integration process with a software application provided by another device under a Software as a Service (SaaS) framework, such as an enterprise resource planning (ERP) software application (e.g., a software application provided by the software application implementation device 140).

In some embodiments, the remote software application implementation device 180 is configured to activate the second software application integration bot 195. In some embodiments, the second software application integration bot 195 is an automated computing entity that is configured to facilitate performance of a software application integration process. In this regard, in some embodiments, the second software application integration bot 195 is configured to start facilitating performance of a software application integration process in response to being activated by the remote software application implementation device 180. In some embodiments, the remote software application implementation device 180 is configured to activate the second software application integration bot 195 in response to receiving the second software application integration instruction from the software application implementation device 140.

In some embodiments, the second software application integration bot 195 is configured to generate a second software application integration command. In some embodiments, the second software application integration command includes one or more items of data representative and/or indicative of a computing related command, message, request, question, and/or the like that is generated by the second software application integration bot 195 and is associated with performing a software application integration processes, such as described above with respect to a software application integration command. In some embodiments, the second software application integration bot 195 is configured to generate a second software application integration command using a second software application integration model. In some embodiments, the second software application integration model includes a large language model that is configured to generate the second software application integration command in a natural language format.

In some embodiments, the second software application integration bot 195 is configured to transmit the second software application integration command. In some embodiments, the second software application integration bot 195 is configured to transmit the second software application integration command to the first software application integration bot 185. In some embodiments, the second software application integration bot 195 is configured to transmit the second software application integration command to the first software application integration bot 185 in real-time. In this regard, for example, the second software application integration bot 195 is configured to transmit the second software application integration command to the first software application integration bot 185 in response to generating the second software application integration command.

In some embodiments, the second software application integration bot 195 is configured to receive a second software application integration response. In some embodiments, the second software application integration bot 195 is configured to receive a second software application integration response from the first software application integration bot 185. In this regard, in some embodiments, the first software application integration bot 185 is configured to generate the second software application integration response. In some embodiments, the second software application integration response is in a natural language format.

In some embodiments, the second software application integration response is one or more items of data representative and/or indicative of a computing related command, message, request, question, response and/or the like associated with performing a software application integration processes that is responsive to a second software application integration command, such as described above with respect to a software application integration response.

In some embodiments, the second software application integration bot 195 is configured to execute a second software application integration program. In some embodiments, the second software application integration bot 195 is configured to execute a second software application integration program based on the second software application integration response. In this regard, for example, the second software application integration bot 195 may be configured to use the second software application integration response to execute the second software application integration program.

In some embodiments, a second software application integration program is a computing program, a computing executable, a computing file, computing code, and/or the like that, upon execution, is configured to perform an integration process for a software application provided by the software application implementation device 140, such as described above with respect to a software application integration program.

### Example Methods

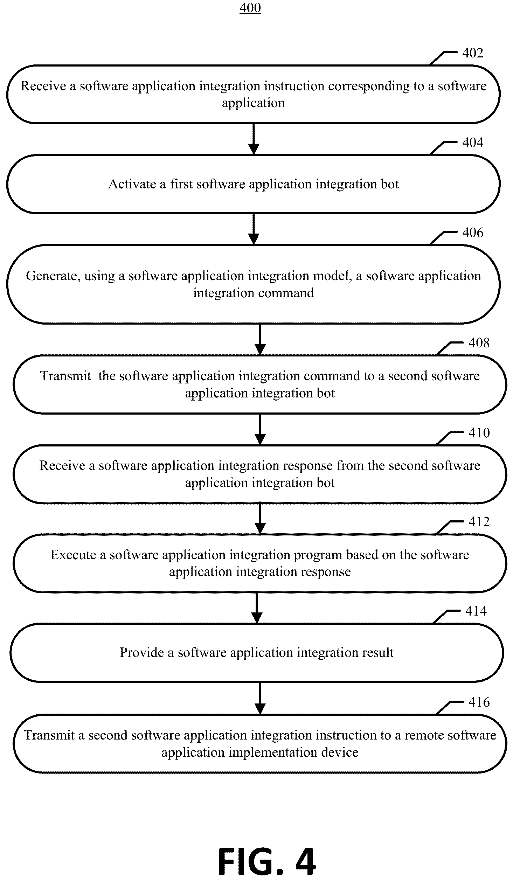

Referring now to FIG. 4, a flowchart providing an example method 400 is illustrated. In this regard, FIG. 4 illustrates operations that may be performed by the software application implementation device 140, the software application implementation database 150, the remote software application implementation database 170, the remote software application implementation device 180, the software application implementation device 140, and/or the user device 160. In some embodiments, the method 400 includes operations for providing a software application integration result and/or activating one or more software application integration bots. In some embodiments, the example method 400 defines a process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 400.
shown in block 402, the method 400 includes receiving a software application integration instruction corresponding to a software application. As described above, in some embodiments, a software application integration instruction is an instruction to a device to perform an integration process with a software application provided by another device. In this regard, in some embodiments, a software application integration instruction is an instruction to a device to perform an integration process with a software application provided by another device such that the device may exchange data with the software application and/or use the software application to generate inferences. For example, a software application integration instruction may be an instruction to the software application implementation device 140 to perform an integration process with a software application provided by the remote software application implementation device 180.

In some embodiments, a software application integration instruction corresponds to a software application. In this regard, in some embodiments, a software application integration instruction is an instruction to a device to perform an integration process with a particular software application provided by another device. For example, a software application integration instruction may be an instruction to perform an integration process with a software application provided by another device under a Software as a Service (SaaS) framework, such as an enterprise resource planning (ERP) software application.

As shown in block 404, the method 400 includes activating a first software application integration bot. As described above, in some embodiments, the first software application integration bot 185 is an automated computing entity that is configured to facilitate performance of a software application integration process. In this regard, in some embodiments, the first software application integration bot 185 is configured to start facilitating performance of a software application integration process in response to being activated by the software application implementation device 140. In some embodiments, the software application implementation device 140 is configured to activate the first software application integration bot 185 in response to receiving the software application integration instruction.

As shown in block 406, the method 400 includes generate, using a software application integration model, a software application integration command. As described above, in some embodiments, the software application integration command includes one or more items of data representative and/or indicative of a computing related command, message, request, question, and/or the like that is generated by the first software application integration bot 185 and associated with performing a software application integration processes. In this regard, in some embodiments, the software application integration command may be representative and/or indicative of a request to identify an application programming interface (API) configuration the software application implementation device 140 needs to use in order to exchange data with and/or generate inferences using the software application provided by the remote software application implementation device 180. Additionally, or alternatively, the software application integration command may be representative and/or indicative of a request to identify a security protocol the software application implementation device 140 needs to use in order to exchange data with and/or generate inferences using the software application provided by the remote software application implementation device 180. Additionally, or alternatively, the software application integration command may be representative and/or indicative of a request to identify security credentials the software application implementation device 140 needs to use in order to exchange data with and/or generate inferences using the software application provided by the remote software application implementation device 180.

Additionally, or alternatively, the software application integration command may be representative and/or indicative of a data type command. In some embodiments, a data type command includes one or more items of data representative and/or indicative of a computing related command, message, request, question, and/or the like in which the software application implementation device 140 indicates the type of data the remote software application implementation device 180 should provide to the software application implementation device 140 in order for the software application implementation device 140 to use the software application provided by the remote software application implementation device 180. Additionally, or alternatively, the software application integration command may be representative and/or indicative of a data formatting command. In some embodiments, a data formatting command includes one or more items of data representative and/or indicative of a computing related command, message, request, question, and/or the like in which the software application implementation device 140 indicates the a format that the remote software application implementation device 180 should provide data in to the software application implementation device 140 in order for the software application implementation device 140 to use the software application provided by the remote software application implementation device 180.

As shown in block 408, the method 400 includes transmit the software application integration command to a second software application integration bot. As described above, in some embodiments, the first software application integration bot 185 is configured to transmit the software application integration command to the second software application integration bot 195. In some embodiments, the first software application integration bot 185 is configured to transmit the software application integration command to the second software application integration bot 195 in real-time. In this regard, for example, the first software application integration bot 185 is configured to transmit the software application integration command to the second software application integration bot 195 in response to generating the software application integration command.

As shown in block 410, the method 400 includes receive a software application integration response from the second software application integration bot. As described above, in some embodiments, the software application integration response is one or more items of data representative and/or indicative of a computing related command, message, request, question, response and/or the like associated with performing a software application integration processes that is responsive to a software application integration command. In this regard, in some embodiments, the software application integration response may be representative and/or indicative of an application programming interface (API) configuration the software application implementation device 140 needs to use in order to exchange data with and/or generate inferences using the software application provided by the remote software application implementation device 180. Additionally, or alternatively, the software application integration response may be representative and/or indicative of a security protocol the software application implementation device 140 needs to use in order to exchange data with and/or generate inferences using the software application provided by the remote software application implementation device 180. Additionally, or alternatively, the software application integration response may be representative and/or indicative of security credentials the software application implementation device 140 needs to use in order to exchange data with and/or generate inferences using the software application provided by the remote software application implementation device 180.

Additionally, or alternatively, the software application integration response may be representative and/or indicative of the type of data that the remote software application implementation device 180 is able to provide to the software application implementation device 140 to use the software application provided by the remote software application implementation device 180 (e.g., responsive to a data type command). Additionally, or alternatively, the software application integration response may be representative and/or indicative of the data format that the remote software application implementation device 180 is able to provide to the software application implementation device 140 to use the software application provided by the remote software application implementation device 180 (e.g., responsive to a data formatting command).

As shown in block 412, the method 400 includes execute a software application integration program based on the software application integration response. As described above, in some embodiments, the first software application integration bot 185 is configured to execute a software application integration program based on the software application integration response. In this regard, for example, the first software application integration bot 185 may be configured to use the software application integration response to execute the software application integration program.

In some embodiments, a software application integration program is a computing program, a computing executable, a computing file, computing code, and/or the like that, upon execution, is configured to perform an integration process for a software application provided by the remote software application implementation device 180.

In some embodiments, a software application integration program includes an application programming interface (API) configuration program. In some embodiments, an application programming interface (API) configuration program is a computing program, a computing executable, a computing file, computing code, and/or the like that, upon execution, configures an application programming interface (API) such that the software application implementation device 140 is able to exchange data with and/or generate inferences using the software application provided by the remote software application implementation device 180. For example, an application programming interface (API) configuration program may be a computing program, a computing executable, a computing file, computing code, and/or the like that, upon execution, configures an application programming interface (API) used by the software application implementation device 140 to exchange data with and/or generate inferences using the software application provided by the remote software application implementation device 180.

In some embodiments, a software application integration program includes a security protocol implementation program. In some embodiments, a security protocol implementation program is a computing program, a computing executable, a computing file, computing code, and/or the like that, upon execution, implements a security protocol such that the software application implementation device 140 is able to exchange data with and/or generate inferences using the software application provided by the remote software application implementation device 180. For example, a security protocol implementation program may be a computing program, a computing executable, a computing file, computing code, and/or the like that, upon execution, implements a security protocol used by the software application implementation device 140 to exchange data with and/or generate inferences using the software application provided by the remote software application implementation device 180.

In some embodiments, a software application integration program includes a credentials generation program. In some embodiments, a credentials generation program is a computing program, a computing executable, a computing file, computing code, and/or the like that, upon execution, generates security credentials for the software application implementation device 140 such that the software application implementation device 140 is able to exchange data with and/or generate inferences using the software application provided by the remote software application implementation device 180. For example, a credentials generation program may be a computing program, a computing executable, a computing file, computing code, and/or the like that, upon execution, generates security credentials used by the software application implementation device 140 to exchange data with and/or generate inferences using the software application provided by the remote software application implementation device 180.

As shown in block 414, the method 400 includes providing a software application integration result. As described above, in some embodiments, a software application integration result includes one or more items of data representative and/or indicative of a result of an execution of a software application integration program. For example, a software application integration result may be representative and/or indicative of a result of an execution of an application programming interface (API) configuration program. As another example, software application integration result may be representative and/or indicative of a result of an execution of a security protocol implementation program. As another example, software application integration result may be representative and/or indicative of a result of an execution of a credential generation program.

As shown in block 416, the method 400 includes transmitting a second software application integration instruction to a remote software application implementation device. As described above, in some embodiments, a second software application integration instruction is an instruction to a device to perform an integration process with a software application provided by another device. In this regard, in some embodiments, a second software application integration instruction is an instruction to a device to perform an integration process with a software application provided by another device such that the device may exchange data with the software application and/or use the software application to generate inferences. For example, a second software application integration instruction may be an instruction to the remote software application implementation device 180 to perform an integration process with a software application provided by the software application implementation device 140.

In some embodiments, a second software application integration instruction corresponds to a software application, such as a second software application. For example, a software application integration instruction may be an instruction to perform an integration process with a software application provided by another device under a Software as a Service (SaaS) framework, such as an enterprise resource planning (ERP) software application (e.g., a software application provided by the software application implementation device 140).

In some embodiments, the remote software application implementation device 180 is configured to activate the second software application integration bot 195. In some embodiments, the second software application integration bot 195 is an automated computing entity that is configured to facilitate performance of a software application integration process. In this regard, in some embodiments, the second software application integration bot 195 is configured to start facilitating performance of a software application integration process in response to being activated by the remote software application implementation device 180. In some embodiments, the remote software application implementation device 180 is configured to activate the second software application integration bot 195 in response to receiving the second software application integration instruction from the software application implementation device 140.

In some embodiments, the second software application integration bot 195 is configured to generate a second software application integration command. In some embodiments, the second software application integration command includes one or more items of data representative and/or indicative of a computing related command, message, request, question, and/or the like that is generated by the second software application integration bot 195 and is associated with performing a software application integration processes, such as described above with respect to a software application integration command. In some embodiments, the second software application integration bot 195 is configured to generate a second software application integration command using a second software application integration model. In some embodiments, the second software application integration model includes a large language model that is configured to generate the second software application integration command in a natural language format.

In some embodiments, the second software application integration bot 195 is configured to transmit the second software application integration command. In some embodiments, the second software application integration bot 195 is configured to transmit the second software application integration command to the first software application integration bot 185. In some embodiments, the second software application integration bot 195 is configured to transmit the second software application integration command to the first software application integration bot 185 in real-time. In this regard, for example, the second software application integration bot 195 is configured to transmit the second software application integration command to the first software application integration bot 185 in response to generating the second software application integration command.

In some embodiments, the second software application integration bot 195 is configured to receive a second software application integration response. In some embodiments, the second software application integration bot 195 is configured to receive a second software application integration response from the first software application integration bot 185. In this regard, in some embodiments, the first software application integration bot 185 is configured to generate the second software application integration response. In some embodiments, the second software application integration response is in a natural language format.

In some embodiments, the second software application integration response is one or more items of data representative and/or indicative of a computing related command, message, request, question, response and/or the like associated with performing a software application integration processes that is responsive to a second software application integration command, such as described above with respect to a software application integration response.

In some embodiments, the second software application integration bot 195 is configured to execute a second software application integration program. In some embodiments, the second software application integration bot 195 is configured to execute a second software application integration program based on the second software application integration response. In this regard, for example, the second software application integration bot 195 may be configured to use the second software application integration response to execute the second software application integration program.

In some embodiments, a second software application integration program is a computing program, a computing executable, a computing file, computing code, and/or the like that, upon execution, is configured to perform an integration process for a software application provided by the software application implementation device 140, such as described above with respect to a software application integration program.

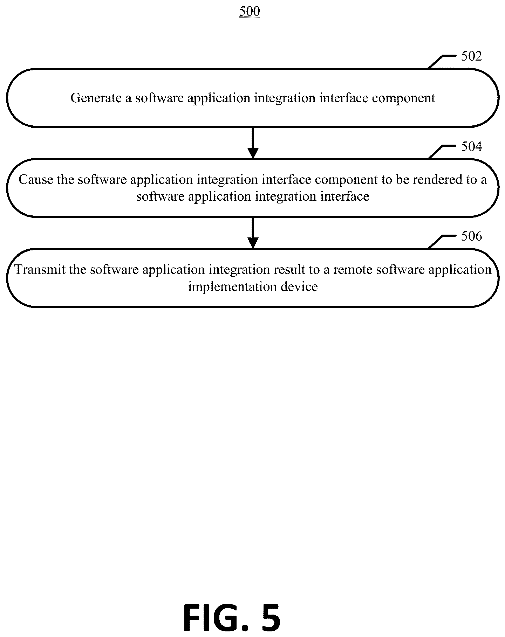

Referring now to FIG. 5, a flowchart providing an example method 500 is illustrated. In this regard, FIG. 5 illustrates operations that may be performed by the software application implementation device 140, the software application implementation database 150, the remote software application implementation database 170, the remote software application implementation device 180, the software application implementation device 140, and/or the user device 160. In some embodiments, the method 500 includes operations for providing a software application integration result. In some embodiments, the example method 500 defines a process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 500.

As shown in block 502, the method 500 includes generating a software application integration interface component. As described above, in some embodiments, the software application integration interface component 302 includes a software application integration command interface element 304 configured to display a software application integration command. In some embodiments, the software application integration interface component 302 includes a software application integration response interface element 306 configured to display a software application integration response. In some embodiments, the software application integration interface component 302 includes a software application integration result interface element 308 configured to display a software application integration result.

As shown in block 504, the method 500 includes causing the software application integration interface component to be rendered to a software application integration interface. As described above, in some embodiments, the software application integration interface 300 may be provided on the software application implementation device 140. Additionally, or alternatively, the software application integration interface 300 may be provided on the user device 160. Additionally, or alternatively, the software application integration interface 300 may be provided on the remote software application implementation device 180.

As shown in block 506, the method 500 includes transmitting the software application integration result to a remote software application implementation device. As described above, in some embodiments, the software application implementation device 140 may be configured to transmit a software application integration result to the remote software application implementation device 180. As another example, the software application implementation device 140 may be configured to transmit a software application integration result to the user device 160.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

## Claims

1. A method comprising:
receiving a software application integration instruction corresponding to a software application;
in response to receiving the software application integration instruction, activating a first software application integration bot, wherein the first software application integration bot is configured to:
generate, using a software application integration model, a software application integration command;
transmit the software application integration command to a second software application integration bot;
receive a software application integration response from the second software application integration bot; and
execute a software application integration program based on the software application integration response; and
providing a software application integration result.

2. The method of claim 1, wherein the first software application integration bot is hosted by a software application implementation device and the second software application integration bot is hosted by a remote software application implementation device.

3. The method of claim 1, wherein the first software application integration bot is a large language model.

4. The method of claim 1, wherein the software application integration program comprises an application programming interface (API) configuration program.

5. The method of claim 1, wherein the software application integration program comprises a security protocol implementation program.

6. The method of claim 1, wherein the software application integration program comprises a credentials generation program.

7. The method of claim 1, wherein the software application integration command comprises a data type command or a data formatting command.

8. The method of claim 1, wherein providing the software application integration result comprises:
generating a software application integration interface component, wherein the software application integration interface component comprises the software application integration command, the software application integration response, or the software application integration result; and
causing the software application integration interface component to be rendered to a software application integration interface.

9. The method of claim 1, wherein providing the software application integration result comprises:
transmitting the software application integration result to a remote software application implementation device.

10. The method of claim 1, further comprising:
transmitting a second software application integration instruction to a remote software application implementation device, wherein the second software application integration instruction corresponds to a second software application, wherein, in response to receiving the second software application integration instruction, the remote software application implementation device is configured to activate the second software application integration bot.

11. The method of claim 10, wherein the second software application integration bot is configured to:
generate, using a second software application integration model, a second software application integration command;
transmit the second software application integration command to the first software application integration bot;
receive a second software application integration response from the first software application integration bot; and
execute a second software application integration program based on the second software application integration response.

12. An apparatus comprising memory and one or more processors communicatively coupled to the memory, the one or more processors configured to perform operations comprising:
receiving a software application integration instruction corresponding to a software application;
in response to receiving the software application integration instruction, activating a first software application integration bot, wherein the first software application integration bot is configured to:
generate, using a software application integration model, a software application integration command;
transmit the software application integration command to a second software application integration bot;
receive a software application integration response from the second software application integration bot; and
execute a software application integration program based on the software application integration response; and
providing a software application integration result.

13. The apparatus of claim 12, wherein the first software application integration bot is hosted by a software application implementation device and the second software application integration bot is hosted by a remote software application implementation device.

14. The apparatus of claim 12, wherein the first software application integration bot is a large language model.

15. A computer program product comprising at least one non-transitory computer-readable storage medium having computer program code stored thereon that, in execution with one or more processors, configures the computer program product for:
receiving a software application integration instruction corresponding to a software application;
in response to receiving the software application integration instruction, activating a first software application integration bot, wherein the first software application integration bot is configured to:
generate, using a software application integration model, a software application integration command;
transmit the software application integration command to a second software application integration bot;
receive a software application integration response from the second software application integration bot; and
execute a software application integration program based on the software application integration response; and
providing a software application integration result.
